Europäisches Patentamt

European Patent Office

Office européen des brevets

(19)

(11) EP 1 460 829 A2

(12) **EUROPEAN PATENT APPLICATION**

(43) Date of publication:
22.09.2004 Bulletin 2004/39

(51) Int Cl.⁷: **H04N 1/32**, H04N 7/32

(21) Application number: 04010289.9

(22) Date of filing: 20.03.2000

(84) Designated Contracting States:
**AT BE CH CY DE DK ES FI FR GB GR IE IT LI LU MC NL PT SE**

(30) Priority: **18.03.1999 GB 9906299**
**09.11.1999 GB 9926530**
**22.12.1999 GB 9930353**

(62) Document number(s) of the earlier application(s) in accordance with Art. 76 EPC:
**00911090.9 / 1 195 047**

(71) Applicant: **BRITISH BROADCASTING CORPORATION**
**London W1A 1AA (GB)**

(72) Inventors:
• **Werner, Oliver**
**Tadworth Surrey KT20 6NP (GB)**
• **Mason, Andrew James**
**Surrey RH2 8DP (GB)**
• **Salmon, Richard Aubrey**
**Redhill RH1 4BG (GB)**

(74) Representative: **Kazi, Ilya et al**
**Mathys & Squire,**
**100 Gray's Inn Road**
**London WC1X 8AL (GB)**

Remarks:
This application was filed on 30 - 04 - 2004 as a divisional application to the application mentioned under INID code 62.

(54) **Watermarking**

(57) A system and method for testing for the presence of a watermark in a picture signal in which the watermark content of the signal is enhances using local mean picture sample values, and then correlated with a watermark signal to provide an estimate of the presence of the watermark. Local mean picture sample values may be derived from reference information received with the picture signal, or may be derived from the received picture signal itself.

Fig. 1

**Description**

The invention relates to embedding a watermark into either a still picture or a sequence of moving pictures; this may be used to assist in detection of copying or identification of the originator of material or for transmitting hidden data. A watermark is a mark or data sequence that is embedded substantially invisibly into a picture for helping to identify the originator or the intended recipient of the picture or to detect tampering.

It has been considered to modulate a watermark onto sample mean values, also known as DC-values, but this has tended to result in unacceptable picture distortion.

Yeung and Mintzer [Journal of Electronic Imaging 7(3), 578-591 (July 1998)] proposed a watermarking system in which a watermark is applied to DC coefficients of a JPEG compressed image. This is stated to produce satisfactory results for an RGB image but there was some noticeable degradation (blockiness) observed when the watermark was applied to luminance values. Investigations by the inventor have suggested that such a technique is unsuited to high quality image reproduction or broadcast quality motion video marking as the artifacts tend to become too visible, and one is generally dealing with a luminance signal rather than an RGB signal.

Qiao and Nahrstedt [IEEE International Conference on Multimedia Computing and Systems, Austin Texas USA, 28th June - 1st July 1998] proposed a watermarking technique in which a watermark is applied to DCT coefficients in the transform domain. The technique is suitable for MPEG coded video. This disclosure notes that problems can arise when a watermark is applied to both DC and AC coefficients and suggests that no watermark should be applied to the DC coefficients. A drawback of this method is that the watermark must be applied in the transform domain and this may require transformation of an image, thereby increasing the complexity of the method.

For the above reasons, attempts have concentrated largely on spread spectrum techniques or embedding information into frequency bands other than DC values. The watermark is usually modulated onto a low frequency band. This makes the watermark more robust against attacks that are based on low pass signal processing such as data compression or digital filtering. This is in line with the properties of the human visual system. As a consequence, an attack on a low frequency band for corrupting the watermark information runs the risk of introducing visible distortions into the picture. However, for similar reasons, embedding the watermark may present problems; it may either require complex and difficult to reproduce algorithms, may not embed the data reliably, or may introduce visible distortions.

A number of patents assigned to Digimarc Corporation having similar disclosures, of which US-A-5832119 is a representative example, disclose a watermarking method in which a periodically repeating picture is filtered to remove low and high frequency components to leave only mid-band components and added to a picture. In addition to the drawbacks identified above for techniques of this nature, a specific drawback with this method which the inventor has identified is that the watermark may become visible with certain picture types, particularly in flat areas of the picture. Due to the complexity of the method and hence processing required, the method is unsuited, in practical terms, to marking of moving video sequences, particularly of broadcast quality.

The inventor has appreciated that, whilst attempts to modulate a watermark signal onto DC values have generally been unsuccessful for the reasons mentioned above, the use of DC values might offer a robust and simple watermarking system as compared to conventional techniques, if these difficulties could be overcome.

According to a first aspect, the invention provides a method as set out in Claim 1.

By making use of a plurality of adjustment factors for each watermark value, each of which adjustment factors is a function of a local estimate of visibility of the watermark within the picture and which is a function of the picture sample values (and substantially independent of the watermark values), it has been found that, surprisingly, the watermark information can be reliably embedded in the picture without causing unacceptable distortion to the picture. The embedded watermark value may then change the local mean or DC-values of the subset of pixels in which it is embedded, rendering detection simple and reliable.

It will be appreciated that this method may result in a watermarked picture in which watermark information is barely present or even not present at all in certain regions of the picture where the estimate of visibility suggests that the presence of the watermark is likely to cause visible distortions to the picture.

Preferably the magnitude of adjustment factors is determined from the picture sample values based on an estimate of visibility, preferably from the local variance. This enables the watermark values to be concealed effectively. There will be a plurality of values calculated for each subset, to take into account picture variation, and there is preferably an independently determined adjustment value for each picture sample, although calculation of neighbouring adjustment factors may involve some overlap to reduce calculation.

The sign of the adjustment factors is preferably a function of the watermark values, the watermark values preferably comprising a binary sequence of 0 and 1, being encoded as positive and negative signs respectively, or vice versa. By changing the sign, a robust coding scheme is provided, the magnitude of the change not being critical in detecting the watermark and hence being adjustable to allow the watermark to be kept substantially invisible. Alternatively, the magnitude may be adjusted in steps; this may increase the available data capacity but may increase visibility, reduce robustness or increase complexity.

In a development, since measures of visibility may be determined from the watermarked picture which should correspond substantially to the originally determined measures of visibility, it should be possible at a decoder to determine the available room for data and thus to employ dynamic allocation of watermark values or data values by encoding more data (perhaps 2 or even 3 bits) in a region where the visibility estimate suggests that larger adjustments can be tolerated. Similarly, decoding may disregard regions where a visibility estimate suggests that no data will be encoded. Weighted filtering may be employed at a decoder, based on an estimate of visibility.

As an alternative to a binary system using positive and negative signs, a three level system in which zero adjustment is employed could be used; this may not be so advantageous for simple watermarking as zero adjustments would not assist in correlation, but could be used for data samples carried within the watermark (as discussed below) to increase the data capacity.

The adjustment factors may be combined with picture values by adding (which term is intended to encompass weighted addition or subtraction); this is simple to implement but effective, but more complex combination such as averaging may be employed.

Where it is desired for the watermark to be robust, for example to carry data or to make the watermark difficult to delete so that the source can be identified, as indicated above, the picture samples are preferably substantially adjacent. Small translations and distortions will tend to leave at least some of each subset of samples sufficiently unaffected for a determination of the watermark value for that subset. A grid may be defined, preferably substantially rectangular for ease of processing, although hexagonal or other grid shapes may be employed, and the samples in each region of the grid may be assigned to a subset. In this way, when it comes to decoding, a slight misalignment of the grid will normally not prevent the majority of samples within a decoding grid from carrying the correct value and permitting correct decoding.

When the picture is to be coded or compressed by an algorithm which partitions the picture into blocks, for example JPEG or MPEG coding, the grid preferably corresponds to blocks or groups of blocks of the coding algorithm. This may enable efficient processing and may also ensure that the watermark is reliably carried (more so than if individual watermark values were assigned to pixels in different blocks).

It has been found that if each subset comprises a block of at least about 4 by 4 samples (or 16 samples if non-rectangular grouping is used), this provides a much higher degree of robustness against a variety of attacks than a comparative example in which significantly fewer (or only one) picture samples per watermark value are employed. Preferably, blocks of at least about 8 by 8 samples (or similar size, at least about 64 samples if non-rectangular grids) are used, more preferably, at least for broadcast quality images, blocks of at least about 8 by 16 (preferably 8 vertically, 16 samples horizontally).

In a preferred development, a restriction condition is applied to the choosing of watermarks from the available watermarks. This may reduce the amount of data that can be carried but may increase robustness or error tolerance or detection. In a preferred embodiment, the watermarks are subdivided into subsets (for example 16 watermarks are sub-divided into 4 subsets of 4 marks) and a restriction condition related to the subsets is employed, for example exactly one (or in certain less preferred cases another predetermined number, for example in the case of larger subsets) watermark is chosen from each subset or each of a predetermined number of subsets (for example 1 mark from each of 3 of 4 subsets of 4 marks). By applying such a restriction, a measure of errors or the reliability of the data can be obtained based on the fact that there should be a given number (preferably one) of watermarks in each subset so if detection yields no marks or a reasonable probability of more than one mark in a subset, it can be assumed that the data is noisy or unreliable.

Watermark values may be assigned to substantially the whole of a picture. This may increase the dimension of the watermark and make unauthorised copying and detection more difficult. However, a repeating watermark may be used, or certain portions of the picture may be left blank.

The watermark may comprise a substantially static component and a variable component, the static component enabling the watermark to be positively identified, and the variable component carrying additional information, for example one or more of picture (or programme) title, date, author, originator, intended recipient, copying permissions, equipment or recording or coding conditions, user definable data and the like. Looked at another way, data may be carried with the watermark. In the case of a moving picture sequence, a separate hidden data stream may be carried, some of the watermark assisting in alignment and framing and the remainder carrying user data. If the application is such that the source and framing of the sequence can be guaranteed, then no static watermark may be needed for synchronisation, and the whole of the watermark may in fact comprise variable user information.

In certain cases, it may be desirable to make the watermark "fragile", so that processing of the data can be detected readily by measuring degradation of the watermark; this may be used for authentication of original copies. This may be achieved by scattering the picture sample values of each subset over the picture, and by increasing the number of watermark values and decreasing the number of pixels per value. At the extreme, the method may be modified to use only a single picture sample per watermark value, but this will normally require use of the original picture to detect the watermark reliably.

The watermark preferably comprises a pseudo random pattern; this makes it harder for an unauthorised person to detect or apply the watermark. However, in certain applications, a logo or regular pattern may be employed; this may simplify identification, for example visually from a difference picture.

When the watermark is embedded into a moving sequence, it has been found that, surprisingly, although the watermark may be almost impossible to detect when the sequence is viewed frame by frame or in slow motion, artifacts may become visible when the sequence is viewed at normal speed. Investigation has found that this is due to movement in the picture causing the effectively static grid corresponding to assignment of watermark values to appear in a similar manner to a dirty window overlaid on the picture. Further investigations have revealed that other known watermarking techniques, when examined closely, are prone to similar problems. The prior art does not address these unforseen problems which are peculiar to moving sequences.

Further aspects of the invention provide methods which may alleviate the problems of watermarking a moving picture and may be employed in conjunction with the first aspect, or independently.

The watermarked picture may be communicated or stored together with data facilitating identification of the watermark.

The invention further provides a method of testing for the presence of a watermark.

The invention further provides methods of creating, embedding and detecting data-carrying watermarks, methods of marking moving pictures, applications of marked pictures, computer program products and apparatus for implementing any of the methods described above or below and further aspects and preferred features are set out in the other independent and dependent claims respectively, and may also be found in the following description of a preferred embodiment.

An embodiment of the invention will now be described by way of example, with reference to the accompanying drawings in which:-

Fig. 1 shows a general outline of a watermarking system;
Fig. 2 illustrates partition of a picture into square cells;
Fig. 3 schematically illustrates an example of calculation of variance for current sample s n and its neighbouring samples that belong to B n,
Fig. 4 illustrates partition of a picture into square cells that carry either a watermark sample or a data bit;
Fig. 5 shows sub-division of a set of 16 watermarks into 4 subsets of 4;
Fig. 6 shows an 8 x 8 sample block for carrying data;
Fig. 7 shows the blocks of Fig. 6 tiled m x n;
Fig. 8 shows the tiled blocks of Fig. 7 forming a data watermark spread across a picture.

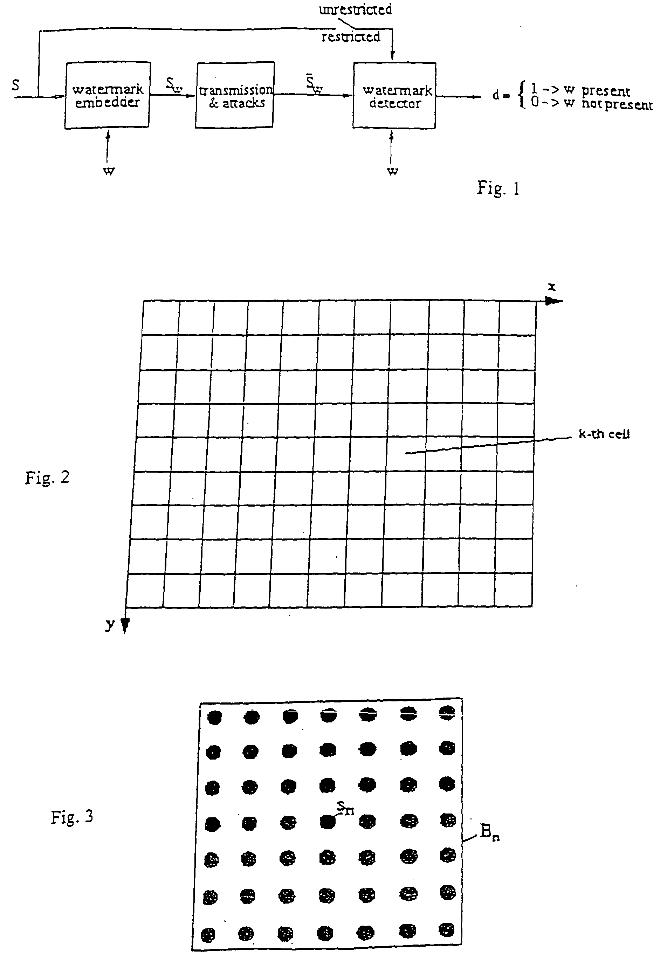

Referring to Fig. 1, the watermark w is embedded into the original signal, resulting in the watermarked signal. The watermarked signal may be changed by friendly attacks that are caused by transmission techniques, e.g. data compression or by hostile attacks that deliberately attempt to remove the watermark. Therefore, the signal $s_w$ instead of $s_w$ feeds the input of the watermark-detector. The detector outputs a binary decision which indicates if a given watermark is present in the input signal or not.

In this description restricted watermarking means that the original signal is also needed as an input to the watermark-detector. In this case watermark detection is restricted to users who are in possession of the original signal. Unrestricted

watermarking means that the original signal is not needed during detection. Both cases will be addressed.

The watermark is a zero-mean (to prevent a change in global mean [average brightness] of the signal after watermarking) white noise random signal that is chosen independently from the original signal and difficult-to-predict for an attacker. The role of the watermark is similar to the role of the secret key in a symmetric crypto-system. A pseudo random bit generator can be used for obtaining the antipodal series w(1),...w(k),...w(K) with

$$(1) \qquad w^2(k)=1 \ , \ k=1,...,K.$$

In restricted watermarking the seed-number of the bit generator can depend on the value of a hash function that is applied to the samples of the original signal for providing authentication.

The original picture s is partitioned into cells. This is shown in Fig. 2 for a square cell shape. There is no restriction on the cell shape and any other tiling of the x/y-plane can be used just as well, for example a hexagonal grid. The cell shape and the cell size are parameters that are kept secret together with the watermark *w*. Let $C_k$ denote the set of indices that select the samples of the k-th cell. The watermark is modulated onto the sample values as

$$(2) \qquad s_w(n) = s(n) + w(k) \cdot \alpha^2(n) \, , \, n \in C_k.$$

The magnitude depends on a visibility measure and determines by how much the amplitude of a sample can be changed without creating a visible distortion. For example the local variance can be calculated in a small window of 7x7 samples that is centred at the current sample position, see Fig.3. Let $B_n$ denote the set of indices that select the samples in the neighbourhood including the current index $n$.

The variance is calculated as

$$(3) \qquad \mathrm{var}(n) = \left( \frac{1}{|B_n|} \cdot \sum_{l \in B_n} s^2(l) \right) - \left( \frac{1}{|B_n|} \cdot \sum_{l \in B_n} s(l) \right)^2$$

Averaging over all samples gives the mean value

$$(4) \qquad \overline{var} = \frac{1}{N} \cdot \sum_{n=1}^{N} var(n)$$

Additionally, the positive modulation index $q$ is introduced for allowing a global control of the energy of the modulated watermark, resulting in the magnitude

$$(5) \qquad \alpha^2(n) = \begin{cases} \dfrac{2 \cdot \mathrm{var}(n) + \overline{var}}{\mathrm{var}(n) + 2 \cdot \overline{var}} & var(n) > th_{flat} \\[2em] \qquad 0 & var(n) \le th_{flat} \end{cases} \quad if$$

As a consequence of eq. (5) no watermark information is embedded into flat areas that are detected with a threshold $th_{flat}$.

Eqn.(5) is one example for the calculation of the magnitude $\alpha^2(n)$ and more sophisticated models of the human visual system can be applied in combination with the embedding method that is specified in eq. (2).

After transmission and possible attacks the received signal $s_w$ is partitioned into cells of appropriate shape and size corresponding to the embedding procedure. For each cell a sample mean value is calculated, hereafter called DC-value. The DC-value of the k-th cell is calculated as

$$(6) \qquad DC(k) = \frac{1}{|C_k|} \cdot \sum_{n \in C_k} \check{s}_w(n),$$

In restricted watermarking a corresponding DC-value is calculated from the original signal $s$,

$$(7) \qquad DC_{ori}(k) = \frac{1}{|C_k|} \cdot \sum_{n \in C_k} s(n),$$

and in unrestricted watermarking a prediction value is calculated from the DC-values specified in eq. (6),

$$(8) \qquad DC_{pred}(k) = \frac{1}{|C_k|} \cdot \sum_{\substack{l \\ l \neq k}} \beta_l \cdot DC(l)$$

The coefficients $\beta_1$ are the same for each picture and can be calculated by linear regression for minimising the mean squared error between $DC(k)$ and $DC_{pred}(k)$. However, in terms of computational complexity a simpler prediction method is to average the DC-values of the neighbouring cells.

In restricted watermarking $\Delta DC(k) = (DC(k)-DC_{pred}(k))$ and in unrestricted watermarking $\Delta DC(k) = (DC(k)-DC_{ori}(k))$ is correlated with the watermark,

$$(9) \qquad corr = \frac{\left(\frac{1}{K} \cdot \sum_{k=1}^{K} \Delta DC(k) \cdot w(k)\right) - \left(\frac{1}{K} \cdot \sum_{k=1}^{K} \Delta DC(k)\right) \cdot \left(\frac{1}{K} \cdot \sum_{k=1}^{K} w(k)\right)}{1 - \left(\frac{1}{K} \cdot \sum_{k=1}^{K} w(k)\right)}$$

The detector decides upon the presence of the watermark in the signal $\hat{s}_w$ if the magnitude of the correlation value exceeds a threshold, $|corr| \geq th_{detect}$. The sign $sgn(corr)$ of the correlation value signals one hidden data bit if the presence of the watermark is detected. As no watermark information is embedded into flat areas the detector has the option to exclude flat areas during the evaluation of eq. (9).

In restricted watermarking it is easier to align the sampling grid of the received signal $\check{s}_w$ relative to the sampling grid that was used for embedding the watermark. This can be done by comparing $\check{s}_w$ with the original signal s which also allows compensation for geometric distortions such as scaling or rotation. In unrestricted watermarking the sampling grids can be aligned by a search for maximum correlation among a set of horizontal and vertical offset values that are applied to the sampling grid of $\check{s}_w$. As every watermark sample is spread over one cell perfect alignment of the sampling grids is not needed for obtaining a good correlation. This property improves significantly the robustness against attacks that re-sample the picture including geometric attacks that introduce an unnoticeable amount of distortion. Additionally, the cell size and the cell shape can be adapted for improving the robustness against specific types of geometric distortions. Rotation, cropping or scaling by a noticeable amount can be handled by hypothesis testing which however results in a computational intensive search for maximum correlation.

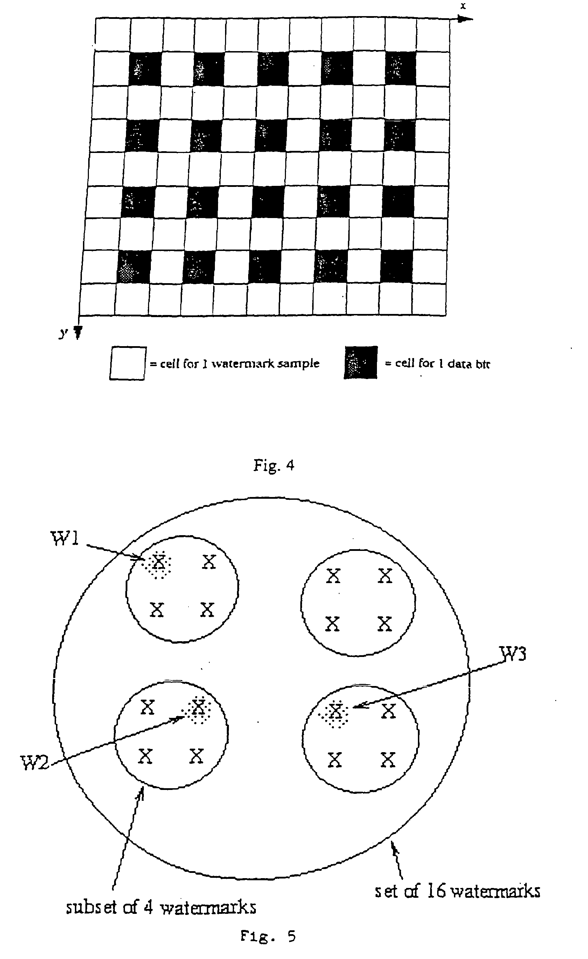

A common method for increasing the capacity of the hidden data channel is to partition the picture into sub-pictures and to apply the above watermarking method to each sub-picture. Another method for increasing the data capacity shall now be exemplified for a square cell shape, see Fig. 4. The white cells are used for the watermarking method as described above. Firstly, the watermark is detected from the white cells at the receiver. This also allows synchronisation and alignment of the sampling grid. Secondly, one data bit is detected from each dark cell as follows. For the k-th cell the DC-values of eqs. (6)-(8) are calculated. In restricted watermarking, the sign of the difference:

$$\Delta DC(k) = (DC(k) - DC_{ori}(k))$$

signals the data bit and in unrestricted watermarking the sign of the difference:

$$\Delta DC(k) = (DC(k) - DC_{pred}(k))$$

signals the data bit. At the transmitter the data bit is embedded similar to eqs. (2)-(5), the watermark sample is replaced with the antipodal data bit in eq. (2). As no information is embedded into flat areas and prediction can fail in local areas of the picture the detector has the option to evaluate the data bit only if

$$th_{data,min} < |\Delta DC (k) = (DC (k) - DC_{pred} (k)) |< th_{data,max}$$

this can be taken into account during embedding.

The above method significantly increases the gross data rate. However, robustness is lost in comparison with the watermark that is carried on the white cells. Therefore, error correcting codes are applied to the data that is carried on the dark cells.

We have described above methods of increasing data rate. In addition to the prediction technique already outlined we will describe another way of increasing the payload. Instead of using one pseudo-random bit pattern as the watermark w a plurality of N substantially statistically independent patterns $w_1, ..., w_N$ is used. The patterns are preferably statistically independent with the following properties:

$$(1) \qquad w_1^2 = ... = w_N^2 = 1$$

$$(2) \qquad E[w_1] = ... = E[w_N] = 0,$$

where E is the expectation operator

$$(3) \qquad E[w_k \cdot w_n] = 0 \text{ if } k \neq n$$

Each payload is represented by a combination of three watermarks. Although there could be fewer (for example 2) or more watermarks combined to increase the data capacity, we have found that, surprisingly, by combining exactly three watermarks from a number (ideally a defined set) of substantially independent watermarks, an optimum result may be achieved in terms of reliability of detection and increase in data payload. Thus, there is a total of N • (N-1) • (N-2) / 6 possible combinations (neglecting trivial or redundant combinations in which two or three watermarks are the same or the order of combination is altered [which cannot be detected using simple combination of watermarks with the picture]). For example, if N=16 there are 560 combinations, and one can carry a payload of 9 information bits, plus reserved combinations for other signalling. Surprisingly, we have found that the payload may be most advantageously increased by selecting a reasonably large number of independent watermarks in this set or "library" and then combining exactly three of these in any one picture (rather than combining larger numbers of watermarks), the maximum size of the library being dependent on the ease with which watermarks can be distinguished, so varying with picture size. In order to ease the notation let us further assume that the actual payload is represented by the three watermarks $w_1, w_2, w_3$ . One could then generate a watermark w, by calculating the average value of $w_1$, $w_2$ and $w_3$:

$$(4) \qquad w = [w_1 + w_2 + w_3 ]/3$$

However, this combination has the property that the expectation value of the product of any of the individual watermarks with the combined watermark is 1/3:

$$(5) \qquad E[w \cdot w_1] = E[w \cdot w_2] = E[w \cdot w_3] = 1/3$$

A more advantageous way of combining $w_1$, $w_2$ and $w_3$ is,

$$(6) \qquad w = [ w_1 + w_2 + w_3 - w_1 \cdot w_2 \cdot w_3]/2$$

The watermark w then has the following properties,

$$(7) \qquad w^2 = 1$$

$$(8) \qquad E[w] = 0$$

$$(9) \qquad E[w \bullet w_1] = E[w \bullet w_2] = E[w \bullet w_3] = \tfrac{1}{2}$$

The watermark w is embedded in the DC-values of the picture in the usual way. For detection of the payload one generates the watermark w'

$$(10) \qquad w' = w_1 + \ldots + w_N$$

and cross-correlates the watermark w' with the DC-values of the pictures in the usual way. If a correlation-peak is detected, the payload is retrieved by cross-correlating each watermark $w_1$, ..., $w_N$ separately with the DC-values and selecting the three watermarks with the largest correlation peaks . Although, as mentioned above, it is greatly preferred if the patterns are independent and satisfy the above rules, it may be desirable in some cases to use patterns which are not truly independent but have a low level of cross correlation (this may increase the number of patterns that can be used or simplify pattern selection); this may make it harder to detect each component reliably, but this may be useful in certain applications, for example where it is intended that the data embedded should be well concealed or "fragile" (i.e. easily corrupted). The above provides a method of combining three bipolar watermarks to produce a single bipolar watermark with the property that the product of the combined watermark with each of the constituent marks has an expectation value of ½.

To increase the reliability of data embedding, the available watermarks may be sub-divided into subsets. To recap, the method described above gave a possible 560 combinations, based on the binomial co-efficient

$$\binom{16}{3} = \frac{16!}{3!.(16-3)} = 560$$

which, as mentioned, is just over $2^9$.

In a modified proposal, the set is portioned into 4 subsets of 4 marks and exactly one mark is chosen from each of 3 subsets, as schematically illustrated in Fig. 5. This gives as a number of possible combinations

$$\binom{4}{3} \cdot \binom{4}{1}^3 = 256$$

which is exactly $2^8$ so exactly 8 bits can be carried, with increased robustness, the first binomial coefficient giving the number of ways of choosing 3 subsets from 4 and the second giving the number of ways of choosing 1 from 4 watermarks in a subset.

Although the number of bits of information that is conveyed has been reduced, a detection strategy can be used that can give increased confidence in the reliability of any data detected.

When correlation detection is used, the presence of a peak, over a certain threshold, in the correlation surface of the watermark and the picture (after pre-processing), indicates that the mark has been detected.

The following procedure may be used to extract the data conveyed by the watermarks.

1) Check that exactly three subsets have been used.
Cross-correlate the picture with each of the 16 watermarks in turn. If there are more or fewer than three cross-correlation functions with peaks above the detection threshold then no data can be recovered.

2) Inspect the distribution of the three peaks.

If there are three peaks, they should each belong to a different subset of 4 of the 16 possible watermarks. If more than one mark in a subset has a cross-correlation peak above the threshold then no data can be recovered.

3) Each peak conveys 2 bits of data, and the set of three conveys 2 bits of data.

A particular advantage is that a soft decision threshold can be used, when detection falls below the threshold. For example, the three highest peaks that are derived from different subsets could be used. That is, the threshold can be varied until exactly 3 peaks are detected, with one in each subset, the fact that each mark is in a different subset serving as a check (if the three marks giving the highest peaks are not in different subsets, an error can be assumed).

Higher data rate watermarking

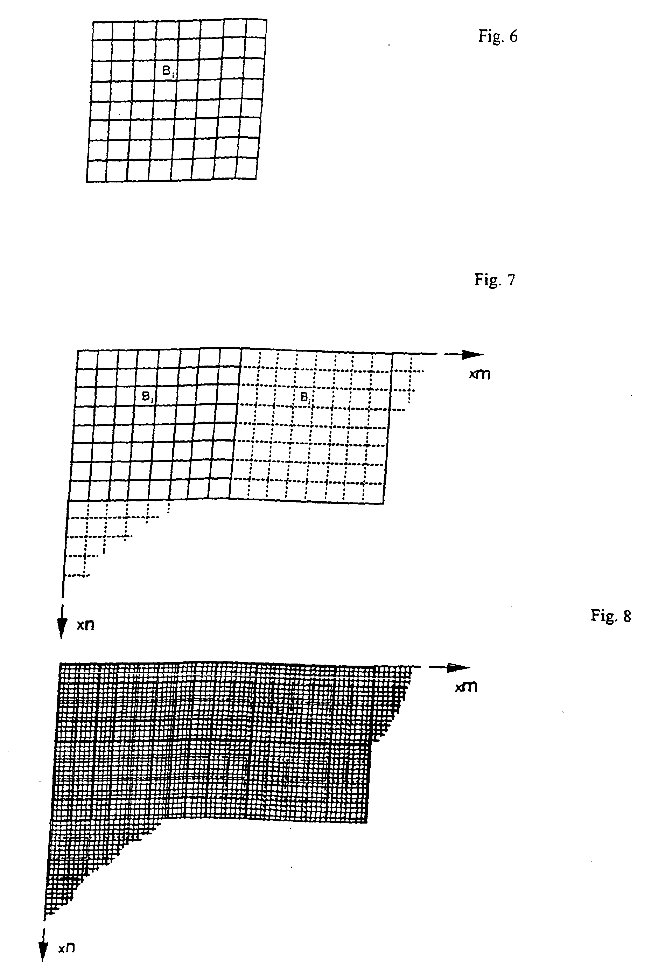

A variety of methods with differing data capacities have been discussed. A further embodiment which may allow the amount of data carried to be increased will now be described, with reference to Figs. 6-8.

To convey a data payload within a video watermark, such as the system described previously, the following method may be employed to scatter the payload data across the picture.

The payload, for example 64 bits having values +1 or -1, may be configured as a block of 8x8 bits (as shown in Fig.6), which may then be tiled mxn times to form a data array as in Figure 7. Bi is one bit in this 8x8 block.

In the watermark encoder each occurrence of payload data Bi is convolved with a pseudo-random sequence of length m x n corresponding to a predetermined key. This is done for each of the 8x8 payload data bits. Each resulting value in this (8xm)x(8xn) array is then used as a watermark. Of course, where different payload sizes and shapes and different tiling patterns are used, the bits of the payload will be convolved with the bits of the key in an appropriate fashion. Convolution of the data is most preferably performed by a multiplication (considering the data to be signed + or -) or equivalently an XOR [or XNOR] operation (considering the input data to be unsigned). The process may be explained as follows:-

| Bipolar multiplication | | | Unipolar XOR | | |
|---|---|---|---|---|---|
| Data | Key | Watermark | Data | Key | Watermark |
| +1 | +1 | +1 | 1 | 1 | 0 |
| +1 | -1 | -1 | 1 | 0 | 1 |
| - 1 | +1 | -1 | 0 | 1 | 1 |
| - 1 | -1 | +1 | 0 | 0 | 0 |

The watermark is ideally a zero mean, as indicated above, so if the watermark is generated from a logical XOR, the binary values 0 and 1 would in fact be applied to the picture as bipolar values, with 1 corresponding to +1 and 0 corresponding to -1 (or vice versa). It will be noted that the absolute amounts to be added to or subtracted from each pixel value may in fact vary from pixel to pixel, based on a local estimate of visibility, as described above; however, whilst this is highly preferred, the method of generating a watermark which carries data can be used in conjunction with another method of embedding the watermark.

Each bit of the resulting watermark is applied to a block of pixels in a picture (ideally 4x4, which is found to give optimum results in terms of enabling each data bit to be reliably detected and allowing a large key and data payload size, but other block sizes and shapes may be used) such that the array is spread over the whole or part of the extent of the picture, as shown in Fig.8. In a most preferred example, for a television picture of 576 lines by 720 pixels, this gives 18 x 22.5 blocks of 8 x 8 data bits each spread over a block of 4 x 4 pixels; this allows 405 bits for the key (the geometric arrangement is not critical, so the half blocks can be split over 2 lines). This arrangement is advantageous as the relatively large key allows reliable detection, but still allows a useful data payload. Of course, other payload sizes and configurations may be used, for example 16x8 blocks may carry 128 bits with a 202 bit key and 16x16 blocks may carry 256 bits, allowing 101 bits for the key; such a key may still be reliably detected in many cases. For example if the watermark is applied to a signal as it is transmitted, such a key should be detectable at a receiver, for example to enable programme identification information to be decoded reliably. The blocks need not be square, nor even rectangular (though these are most convenient for efficient packing of data, and less vulnerable to corruption of data by resizing operations) or even regular, but any shape which can be applied many times over the picture and interlocking or disjointed, but preferably non-overlapping shapes, may be used. To summarise, the method of embedding the watermark may be considered in three ways as follows:-

1) Block by block

The data block is replicated nxm times, so in our example we can consider a set of 405 8x8 data blocks all containing identical data. 405 individual pseudo-random sequences of length 8x8 = 64 (having values +1 and -1) are then convolved with the data in each block.

The blocks are then assembled to make a single rectangular array in some convenient manner, and each point in that array is expanded to cover, in our example, say 4x4 individual pixels in the picture (for a picture of normal European TV resolution, 720x576). This watermark may then be combined with other watermarks, as discussed below.

2) Whole picture

The picture area is to be considered as groups of say axb pixels. In our example, this is 4x4. The data block is replicated nxm times across the entire picture, such that each element of an 8xm by 8xn (180x144) array corresponds to a 4x4 cluster of picture pixels. Special arrangements must be made for edge effects if n or m are not integers. In our example a single pseudo-random sequence of length $8 \times 8 \times 22.5 \times 18 = 25920$ (having values +1 and -1) is then convolved with the $180 \times 144$ array.

Each point in the resulting array is expanded to cover, in our example, 4x4 individual pixels in the picture (for a picture of normal European TV resolution, 720x576). This watermark may then be combined with other watermarks, as discussed below.

3)Data bit by data bit

Each data bit in the 8x8 data block is replicated nxm times, to create a set of 64 mxn arrays. To take account of the non-integer value of m or n, the resulting array may have varying number of data points on each line, or may be considered as a set of 64 405-element linear arrays. 64 individual pseudo-random sequences of length 22.5x18 = 405 (having values +1 and -1) are then convolved with each array.

The 64 arrays are then interleaved (every 8 positions vertically and horizontally, or in some other way) to make a single rectangular array of size 180x144 (in our example), and each point in that array is expanded to cover, in our example, 4x4 individual pixels in the picture (for a picture of normal European TV resolution, 720x576). This watermark may then be combined with other watermarks, as discussed below.

The resulting watermark may be applied as a single watermark to the picture, and detected as for other watermarks by cross correlation with the key.

It will be appreciated that the three examples mentioned above may be applied to different watermark and data payload sizes.

Most preferably, using the principles discussed above, and, as discussed further below, a further registration watermark is included, at a known position with respect to the data-carrying watermark. It is desirable, as discussed above that the registration watermark is substantially orthogonal to the data carrying watermark. It will be appreciated that the data carrying watermark varies with the data, and it is not practicable to test every possible data set for orthogonality of the resulting data-carrying watermark with the registration watermark. It is, however, possible to test each (405 bit or whatever size) key segment for degree of correlation with the corresponding (i.e. co-located) segment of the registration watermark to ensure a low correlation for each segment. Since the data merely affects the sign of each segment, if the correlation is low, it will remain low whatever the data. Thus, in the ideal case where the correlation between each key segment and each corresponding watermark segment is exactly zero, this will remain true whatever the data, and the sum of the correlations, being the correlation between the complete data-carrying watermark and registration watermark, will also be zero. It is important to note that simply correlating a complete data carrying watermark (for example with dummy data all 1s) with the complete registration watermark will not give a reliable test as some segments may cancel by chance, but would not cancel if the data were different.

Turning to the method of detection, this may comprise:-

A) Perform local averaging over each 4x4 (or whatever was used) block of pixels to extract DC prediction values (as described above, see particularly equation 8 above and related description). In a preferred implementation, we have found that performing 2x2 averaging, determining DC prediction values for each 2x2 block, and then forming a single average DC prediction value for each 4x4 block may yield better results. This feature may be applied independently, in particular to the basic watermarking technique mentioned above.

B) For each data bit position within each 8x8 block (or whatever shape or size was used), determine the corresponding n x m block (or whatever shape was used) or sequence of key bits to correlate with the predetermined key (or one of a number of predetermined keys - see below). A strong positive or negative correlation gives a positive or negative value for the data bit accordingly (or vice versa) and failure to correlate above a threshold indicates that the picture may be corrupted, or the data unreliable.

As an optional check, the key values can be re-correlated, using the determined data values, to give a further measure of reliability. If the starting position in the picture was not certain, the process may be repeated for different positions or offsets, to determine the position which gives the maximum correlation.

The key used most preferably varies for each data bit. Looked at another way, each key (say 405 bits) can be viewed as a key segment of a larger key (64*405 bits). Using a different key for each bit ensures that the data bits can be distinguished and are not decoded in the wrong sequence due to shifts in the picture, and also avoids repeating patterns in the watermark, thereby reducing detectability. On the other hand, in the event that the data is shifted, the data will then become undetectable without searching for a registration point. In a preferred implementation, an additional registration watermark is provided, as discussed below, to facilitate registration; once the position of the known, higher dimension watermark is determined accurately, the data can be reliably detected. As with the embedding process, the detection process can be viewed in three ways, as follows:-

1) Block by block
In the detector the picture frame is processed creating a DC prediction error matrix of dimensions 22.5x8 by 18x8. This is broken down into 405 individual 8x8 blocks, each of which is multiplied by the pseudo-random sequence with which it was originally convolved. Averaging the 405 blocks will produce a single 8x8 correlation matrix, with positive or negative values in each cell of the matrix corresponding to the sign of the original data.

2)Whole picture
In the detector the picture frame is processed creating a DC prediction error matrix of dimensions 180 by 144. This is multiplied by the same pseudo-random sequence as that with which it was originally convolved. Averaging every eighth value along every eighth line (405 points) for each position of an 8x8 array will produce an 8x8 correlation matrix, with positive or negative values in each cell of the matrix corresponding to the sign of the original data.

3)Data bit by data bit
In the detector the picture frame is processed creating a DC prediction error matrix of dimensions 180 by 144. This is broken down into 64 individual mxn arrays by the inverse process by which they were assembled into a single array, and each of them is multiplied by the pseudo-random sequence with which it was originally convolved. Averaging the 405 values in each of the 64 blocks will produce 64 correlation values, with positive or negative values corresponding to the sign of the original data.

It will be seen that all three embedding and detection methods are equivalent and have equivalent effects on a picture, but may differ in the way in which they are implemented in hardware or software (all aspects and features of the invention may be implemented in either or a combination of both), for example in the loop structure of a software implementation or the processing layout of a hardware implementation.

To improve accuracy and reliability of detection, it is useful to include a further watermark, the content of which is fixed, or which has a larger fixed (key) content and smaller data content, for example the watermark may be used as one of several (most preferably three) watermarks $w_k$, in the manner described above. As stated, the watermark may be combined with one or more fixed watermarks or further data carrying watermarks. In the latter case, the different data carrying watermarks are preferably convolved with substantially orthogonal keys. In one example, a single fixed watermark, selected from a small group of fixed watermarks. Thus, applying the principles described above for encoding data by including exactly three from sixteen watermarks, ideally sub-divided into four subsets of four watermarks (or whatever other numbers are chosen), in this case, the keys rather than complete watermarks are chosen as indicated above and the watermarks themselves are generated by convolving the keys with further data. Thus, choosing 3 from 4 subsets of 4 keys allows 8 bits to be encoded, applying the principles mentioned above. In addition, each key is convolved with an 8x8 block of 64 bits of data, giving a total of 3*64+8=200 bits. It will be appreciated that certain information will be carried more robustly than other information, and the principle of carrying information with differing degrees of robustness may be independently provided, using other methods for encoding the data. A preferred implementation has one registration watermark, preferably selected from a relatively small set of possible watermarks, the choice of watermark encoding a few bits of information and two data-carrying watermarks, preferably each using a fixed key and encoding typically 64 bits of data each.

References to convolving data with a key as used herein are not limited to the multiplying and XOR operations described but apply more generally to combination in which the resulting watermark is a function of both the data and the key, particularly any form of combining wherein the data can be extracted from the resulting watermark using the key.

The above described methods for carrying hidden data and watermarking can be applied to both still and moving pictures. In the latter case motion imposes an additional problem in terms of attacks and visibility of the watermark, and the spatial model of eqs. (3)-(5) may have to be enhanced to a spatio-temporal model, resulting in motion-compensating embedding and detection. A simple; method is to embed the same static watermark only in every n-th (for example every second or third) picture of a moving sequence and/or to alternate between different static watermarks and/or grid patterns.

It is preferable in the case of a moving picture to change the data carried by the watermark only at certain pre-specified points, preferably when a shot change is detected or when an accumulated change in picture content exceeds a threshold. Preferably, the watermark position is moved at a data change, as discussed below.

Preferably a key portion of the watermark is changed when the data is changed, for example a key sequence may be stepped through. The key sequence may be generated from a pseudo random sequence, preferably having a seed value, preferably using a Blum, Blum, Shub random number generator. One or more seed(s) for the random number generator may be communicated to a decoder, preferably embedded in a picture by a method disclosed herein and one or more seed or feature of the algorithm may be stored in the decoder so that the decoder may follow the sequence but an unauthorised party not knowing the seed and algorithm cannot easily do so.

To detect such a watermark, it is necessary to search for the position of the watermark at each shot change. In a detection method which may be provided independently, the invention provides a method of detecting a watermark in a sequence of moving pictures comprising determining an expected position of the watermark and thereafter detecting the watermark based on the expected position, wherein the expected position is re-determined following a shot change or a change in picture content above a threshold.

To reduce the visibility of a watermark in a sequence of moving pictures, it may be desirable to invert the sign of the watermark between pictures each time it is embedded, or according to a predetermined or pseudo-random sequence; in this way the mark will tend to average to zero (not exactly due to picture content modulation) and so will be less visible. This feature may be provided independently or in combination with other features.

The position of the watermark may be moved, particularly if the watermark is a simple pattern such as a chequerboard or the like. The position in the picture can be determined by correlation with a fixed watermark. The position, or more preferably (this is more rugged), relative movement may itself be used to encode information, for example with up, down, left, right being assigned to 2 bit code pairs, or 3 bits if diagonal movement is encoded. The distance moved may be used to encode further information, although this may be less rugged, particularly if the picture is processed by an effects processor. Each of these features relating to movement may be provided independently or in combination with other features.

In one preferred implementation, which may be provided independently, the watermark is moved, preferably randomly (preferably based on a random noise generator rather than a pseudo random sequence generator) substantially at each shot change, or whenever a measure of accumulated change in picture content exceeds a threshold. In the case of a data carrying watermark, preferably the data carried is changed at the same time as the watermark is moved, preferably every shot change. Such changes can assist in reducing detectability by unauthorised persons.

To hide the watermark better, it may be "attached" to a moving object and may move with the object. For example, using algorithms similar to MPEG-2 algorithms to assign motion vectors to blocks (indeed the same coding when the picture itself is to be MPEG coded), a watermark or portions of a watermark may be applied to blocks and then move with the blocks. A drawback, however, is that decoding such a picture will normally require either some information from the original picture or complex image processing algorithms (to identify the objects to which the watermark is attached). This may nonetheless be useful when the picture is being compared to an original version of the picture, for example to detect copying as it will be hard for a pirate to identify and remove the watermark. This feature may be independently provided.

To explain the watermarking of a moving sequence in more detail, the process of averaging many pictures together to produce a single picture has the effect of reducing the variance of the picture luminance if the pictures are time-varying. If the watermark is static the result is that the amplitude of the watermark becomes larger relative to the variance of the picture luminance. If a sufficiently large number of watermarked pictures are averaged, the dominant feature will be the watermark. In practice this might be of the order of 6000 pictures - 4 minutes at television rates. This property may be undesirable since it may assist in revealing the 'secret key' of the watermark. Another problem that may arise when pictures that contain motion are watermarked is that the static watermark may become more visible when the picture to which it is applied is moving. The subjective effect is that of seeing the picture through a glass screen containing imperfections. This may be undesirable for two reasons, because it represents a reduction in the quality of the signals that are produced and because it gives a clue about the nature of the watermarking process that might be useful to malicious persons, in a similar manner to the problem of averaging mentioned above.

Above, motion-compensated embedding is proposed; a motion-compensation method will now be described in more detail in which the static watermark pattern is moved to follow the average motion of the contents of the picture. The features to be described, as well as the general feature of the watermark following motion in a picture, may be employed independently of other features and the features are independent of the precise implementation method used.

To implement this method, as a first step, the average motion of the picture is determined; this may be achieved by any of a number of known methods, such as phase correlation or block matching, each of which have known relative advantages and disadvantages and the implementation is not limited to any particular method. The strength of the watermark is preferably reduced in areas where the actual motion does not match the average motion.

As will be appreciated, the process of determining whether the average motion is a good estimate of the actual motion in a particular part of the picture can be done in several ways and the embodiment is not limited to any particular method. One example of a more accurate method is to divide the picture into smaller blocks and perform a block-matching or correlation process on pairs of blocks. This kind of method is typically used in MPEG-2 video coders to calculate motion vectors. An example of another method, which is less accurate, but computationally far simpler, is simply to compare luminance levels, pixel-by-pixel, between an actual picture and a picture predicted using a motion estimate. If there is a significant difference, then it is assumed that the motion estimate was not accurate.

Detection typically relies on averaging several pictures and account must be taken of the average motion before this. Before the picture sequence is added together, each picture must preferably be shifted to undo the average motion relative to the first picture. Again, the precise method of determining average motion is not critical but it is very highly desirable that the process by which the average motion estimate is made is the same as in the embedding process; otherwise errors may be introduced. A specific implementation of the above will now be described in yet further detail.

An exemplary embedding process is as follows:

1) a watermark $W_k$ is embedded in picture $P_k$
2) the average motion, $v_k$, from $P_k$ to picture $P_{k+1}$ is measured.
This may conveniently be achieved by calculating the cross-correlation function of picture $P_k$ and $P_{k+1}$; this has the benefit of being relatively simple to implement and readily applicable in the step of detection of the watermark. Another benefit is that the apparatus may already include hardware accelerators (or optimised code) for calculating cross correlation of at least a portion of a picture, for other reasons.
3) a spatially shifted watermark $W_{k+1}$ is calculated by applying a cyclic shift to $W_k$ according to the motion estimate $v_k$
4) the error, $E_{k+1}$, in the estimated picture is calculated.
One way this may be achieved by applying the same shift to $P_k$ to give $P^*_{k+1}$, and calculating the difference between pixel luminance values in the estimate $P^*_{k+1}$ and the actual $P_{k+1}$. Another, more advanced, method for calculating the error $E_{k+1}$ is to compare for each pixel the accuracy of the global shift with the estimate of a 'true' motion estimator.
5) the watermark $W_{k+1}$ is then modulated according to the error signal $E_{k+1}$, to generate $W'_{k+1} = W_{k+1} \cdot f(E_{k+1},)$.
The function f is preferably chosen to assist in concealing the watermark in areas where the motion estimate is not accurate and is preferably, but not necessarily, a non-linear function of the error signal. However, the function should also be readily implementable and one simple example is the use of a linear function $(C-|E_{k+1}|)$ where C is a constant equal to the possible range of the error E. The function f may also take into account the occurrence of a shot change or of a still picture displayed over several frame periods; various functions may be chosen depending on the degree to which concealment is required and the computational power available to implement the function.
6) the modulated, shifted watermark $W'_{k+1}$ is embedded into the picture $P_{k+1}$ substantially as described in detail above for static pictures.
This process is then repeated starting at step 2).

A corresponding detection process is as follows:

1) the average motion, $V_k$, from $P_k$ to picture $P_{k+1}$ is measured.
As above, this may conveniently be achieved by calculating the cross-correlation function of picture $P_k$ with $P_{k+1}$, although other methods may be used in both cases.
2) a spatially shifted version of $P_{k+1}$, $P'_{k+1}$, is calculated by applying a cyclic shift opposite to $V_k$
3) the spatially shifted picture $P'_{k+1}$, is added to $P_k$
4) the average motion, $V_{k+1}$, from picture $P_{k+1}$ to picture $P_{k+2}$ is measured by calculating the correlation function of picture $P_{k+1}$, with $P_{k+2}$
5) a spatially shifted picture $P'_{k+2}$ is calculated by applying a cyclic shift opposite to $(V_k+V_{k+1})$ to $P_{k+2}$
6) the spatially shifted picture $P'_{k+2}$ is added to the sum of $P_k$ and $P'_{k+1}$
Steps 4), 5), and 6) are repeated over the number of pictures, N, required for an adequate level of detection to produce a motion compensated average picture P"

$$P'' = ( P_k + P'_{k+1} + P'_{k+2} + .. + P'_{N+k-1} )/N$$

7) the cross-correlation function of the average picture P" with the watermark $W_k$ is calculated as for a static watermark (it will be noted that this may employ or share some hardware or software with the cross-correlation used to determine motion)

The use of motion-compensated watermarking thus makes embedded watermarks difficult to detect by unauthorised individuals and reduces picture degradation.

Preferred Applications

The uses of the watermark fall broadly into two categories, one is identification, the other is authentication. Identification associates the signal with descriptive information. In general, the association is made by using the watermark to convey a unique identification number that points to a record in a database holding more information. Authentication establishes the credibility of a signal. To identify a signal the watermark should be difficult to remove, should be robust against distortions and should be difficult to perceive. To authenticate a signal the watermark should be difficult to create (or imitate), should be sensitive to distortions but can be easy to perceive. The system described above is particularly useful for identification, but, as discussed, may be adapted for either application. There are many scenarios in which the identity of the signal is of significance. Some of these are as follows:

Copyright protection:

Somebody who has created something of artistic worth might wish to be rewarded for the use of their creation. A broadcaster who creates a television programme usually retains rights over the programme. Limited rights to the programme might be sold to another broadcaster permitting some use of the programme - a defined number of broadcasts in a defined geographical area perhaps. The broadcaster owning the rights would like know that the rights granted are not exceeded. If a watermark is added to the programme before it is sold, monitoring of broadcasts around the world can generate reports of detection of the broadcast of the programme by virtue of detecting the watermark. The record of the detections can be analysed to find out whether the rights granted have been exceeded. Copyright infringements that might be found in this way would include the transmission of a programme more times than were agreed, transmission of the programme in more geographical regions than were agreed, or the theft of the programme (either by recording or retransmission of a legitimate broadcast) and use by someone unauthorised. To identify the route by which a programme came to be used illegitimately, a watermark can be made specific to an individual copy of the programme. Such a watermark is often called a fingerprint. This can be used to identify the recipient of the programme of which the rights were infringed as well as the originator.

Copy protection:

As a step further on from detection of copyright infringements, a watermark can also be used to control the duplication of material. If a recording system is used that will not record signals in which it detects a particular watermark, then this provides a means of preventing illegitimate copies of the recording being made by that system. A related application would use an authenticating watermark to prevent replay of signals unless the mark were detectable in the signals.

Production meta-data tracking:

The processes that are involved in producing television programmes are often complex and numerous. To keep track of all the programme material during this procedure can be difficult. The descriptive information, called meta-data, associated with the picture or sound signal (such as what it is, where it came from, where it has been used, where it will be used) can easily become dissociated from the signal itself. A simple example would occur when a self-adhesive label carrying a unique identifying programme number falls off the side of a video-cassette. An identifying watermark embedded in the pictures can be used to relate the pictures back to the descriptive information. Data embedded may comprise a SMPTE Unique Material identifier (UMID) or a subset of the data defined therein or a proprietary programme identifier such as a British Broadcasting Corporation Audio-visual number. Considerations pursuant to the invention suggest that, for most purposes, a 32 bit number may be adequate. However, 48 bits is preferable and a 64 bit identifier enables maximum flexibility of encoding for a variety of producers, users and purposes. Since it has not hitherto been easy to embed such amounts of data in a picture, prior art considerations have concentrated on packing data into a small identifier, rather than increasing the data payload.
The stage of the production process at which such a watermark is embedded depends of the information tracking requirements. Conceivably, the watermark could be embedded by a camera and could consist of a unique identifier which conveys the time of day and geographical location as well as a serial number corresponding to the camera. This would allow the plethora of constituent video clips that are combined to make a typical television programme to be identified and traced back to their source at any stage of the process, even, given sufficient robustness, after broadcast and re-recording.

At each stage of the production process, including final broadcast, every piece of equipment, on detecting the watermark, could update a database that records the use of all programme material. This can be used to check that contractual agreements relating to rights are not being breached, or to ensure that when material is used anyone entitled to payment for its use is paid.

Each feature disclosed herein may be independently provided, unless otherwise stated. The appended abstract is incorporated herein by reference.

Embodiments of the invention will now be described in the following numbered clauses:

1. A method of embedding a watermark signal comprising a series of watermark values in a picture signal comprising a series of picture sample values, the method comprising adjusting picture sample values based on watermark Values, characterised in that adjusting comprises, for each watermark value:

combining the watermark value with a respective subset of the picture sample values using a plurality of adjustment factors, each adjustment factor being based on a local estimate of the visibility of the watermark at a corresponding picture sample location.

2. A method according to Clause 1 wherein the magnitude of each adjustment factor is a function of the picture sample values, preferably based on the localised variance of the picture sample values.

3. A method according to Clause 1 or Clause 2, wherein the sign of each adjustment factor is a function of the watermark values.

4. A method according to any preceding clause, wherein combining comprises adding an adjustment factor to each picture sample value.

5. A method according to any preceding clause wherein the picture sample locations for each said subset corresponding to a given watermark value are substantially adjacent.

6. A method according to Clause 5, wherein a grid dividing the picture into a plurality of regions is defined and wherein each said subset comprises picture samples corresponding to a respective region of the grid.

7. A method according to Clause 6, wherein the grid is substantially rectangular.

8. A method according to Clause 7 wherein each region corresponds to a block of a coding process, for example MPEG or JPEG compression.

9. A method according to any preceding clause wherein watermark values are assigned to substantially all of said regions of the picture.

10. A method according to any of Clauses 1 to 8 wherein watermark values are assigned to a first group of said regions and sample values of a data sequence are assigned to a second group of said regions.

11. A method according to any of Clauses 1 to 4, wherein the picture sample locations for each subset are scattered throughout the picture.

12. A method according to any preceding clause wherein the watermark signal comprises a pseudo-random sequence.

13. A method according to any preceding clause wherein the watermark signal comprises a regular pattern.

14. A method according to any preceding clause, wherein the watermark signal has a substantially zero mean whereby the global mean of the picture sample values in the picture is substantially unaffected by embedding of the watermark.

15. A method according to any preceding clause wherein combining is arranged to change the local mean of the picture sample values included in each said subset, the sign of the change being determined by the corresponding watermark value.

16. A method according to any preceding clause, wherein each subset contains at least 16 picture sample values.

17. A method according to any preceding clause wherein the adjustment factors are a function of a global modulation index variable whereby the energy of the watermark can be controlled.

18. A method according to any preceding clause wherein said adjustment factors are assigned a value substantially equal to zero for regions having a measure of variance below a predetermined threshold.

19. A method according to any preceding clause for embedding a watermark in a sequence of pictures corresponding to a motion video sequence, wherein the subsets to which watermark values are applied vary from picture to picture.

20. A method of embedding a watermark within a sequence of pictures corresponding to a motion video sequence wherein the watermark is combined with picture sample values characterised in that the method of combining varies from picture to picture to reduce the appearance of static artifacts in the sequence.

21. A method according to any preceding clause for embedding a watermark in a sequence of pictures corresponding to a motion video sequence, wherein applying the watermark to the sequence of pictures includes compensating for motion between pictures.

22. A method according to Clause 21, wherein motion compensation includes estimating average motion between pictures.

23. A method according to Clause 22, wherein applying the watermark includes determining at least a local measure of accuracy of the estimate of average motion.

24. A method according to Clause 23, wherein the watermark is applied so as to be reduced in visibility in areas of the picture (in the case of a local measure of accuracy) or in pictures (in the case of a global measure of accuracy) where said measure indicates that said estimate is inaccurate.

25. A method of embedding a watermark within a sequence of pictures corresponding to a motion video sequence, preferably according to any preceding clause, wherein the watermark is combined with picture sample values characterised in that the method of combining includes generating a motion-compensated version of the watermark to reduce the appearance of static artifacts in the sequence.

26. A method of embedding a watermark within a sequence of pictures corresponding to a motion video sequence, preferably according to any preceding clause, wherein the watermark is combined with picture sample values characterised in that the method of combining includes estimating average motion between the pictures and combining the watermark to reduce the appearance of static artifacts in the sequence.

27. A method according to Clause 26, wherein a measure of the accuracy of said estimate is determined and the strength of the watermark is varied as a function of said measure.

28. A method according to any of Clauses 19 to 27, wherein the watermark is embedded in some but not all pictures of the sequence, preferably wherein at most one in two pictures are watermarked.

29. A method according to any of Clauses 19 to 28, wherein the pattern of picture sample values with which watermark values are combined varies from picture to picture.

30. A method according to Clause 29, wherein embedding the watermark includes defining a grid dividing the picture into regions and wherein at least one characteristic of the grid, for example shape, size or alignment, is varied between pictures of the sequence.

31. A method according to any preceding clause further comprising communicating or storing the watermarked picture together with information to assist in identifying the watermark.

32. A method according to Clause 31 wherein said information comprises a series of local mean values, each mean value corresponding to the local mean of a subset of picture sample values prior to application of a watermark value.

33. A method according to Clause 32, wherein the information is compressed, preferably JPEG compressed.

34. A method of testing for the presence of a watermark embedded in a picture signal by a method according to any preceding clause, comprising receiving the picture signal;
correlating the picture signal or a processed signal derived therefrom with a watermark signal;
outputting an estimate of the presence of the watermark based on the results of said correlation.

35. A method according to Clause 34 including processing the picture signal prior to said correlating to produce said processed signal having an enhanced watermark content.

36. A method according to Clause 35 wherein processing includes filtering based on received reference picture information.

37. A method according to Clause 36 wherein the received reference picture information comprises reference local mean values indicative of local mean values of subsets of picture samples in the picture prior to watermarking, or compressed information from which said reference local mean values can be derived.

38. A method according to Clause 37 wherein processing includes estimating local mean values indicative of local mean values of subsets of picture samples in the picture prior to watermarking.

39. A method according to Clause 37 or 38 wherein processing includes subtracting the reference or estimated local mean values from local mean values determined for the received picture signal to give a difference signal.

40. A method according to any of Clauses 37 to 39 wherein a grid is defined dividing the received signal into regions corresponding to allocation of watermark values, wherein local mean values are determined for each of said regions.

41. A method according to any of Clauses 34 to 40 further comprising deriving a series of data values from the received picture signal.

42. A method according to Clause 39, 40 and 41 wherein the data sample values are determined based on the sign of the difference signal in regions corresponding to allocation of data values.

43. A method according to any of Clauses 34 to 42 wherein said correlating is performed for a plurality of offsets and the offset giving the maximum correlation is determined to give a measure of the position of the watermark within the picture.

44. A method according to any of Clauses 34 to 43 wherein correlating is performed taking into account possible effects of picture processing operations, for example rotation, scaling, shifting, cropping or re-sampling operations.

45. A method according to any of Clauses 1 to 33, wherein the watermark is derived from a combination of a number of substantially independent watermarks or wherein a number of substantially independent watermarks are embedded in each picture.

46. A method according to Clause 45, wherein said substantially independent watermarks satisfy the following criteria:-

$$(1) \qquad w_1^2 = ... = w_N^2 = 1$$

$$(2) \qquad E[w_1] = ... = E[w_N] = 0,$$

where E is the expectation operator

$$(3) \qquad E[w_k \bullet w_n] = 0 \text{ if } k \neq n.$$

47. A method according to Clause 45 or 46, wherein said number of substantially independent watermarks comprises a subset selected from a defined set of substantially independent watermarks.

48. A method according to Clause 47 wherein said number is three.

49. A method according to Clause 47 or 48, wherein there are more than three substantially independent watermarks in said set.

50. A method according to any of Clauses 45 to 49, wherein the subset is selected or said substantially independent watermarks are selected in dependence on information to be encoded in the picture.

51. A method according to any of Clauses 45 to 50, wherein three bipolar watermarks are combined to produce a single bipolar watermark with the property that the product of the combined watermark with each of the constituent marks has an expectation value of ½.

52. A method according to any of Clauses 34 to 44 for detecting a watermark embedded by a method according to any of Clauses 45 to 51, wherein an estimate of the presence of each of said number of substantially independent watermarks is produced.

53. A method according to Clause 52 as dependent on Clause 47 wherein the picture is cross correlated with a composite watermark derived from a sum of each of the watermarks of said defined set.

54. A method according to Clause 53 wherein, at least in the event of cross correlation with said composite watermark yielding a positive result, the picture is cross correlated with each of the watermarks of said defined set.

55. A method according to Clause 54 as dependent on Clause 48, wherein the three watermarks giving the greatest cross-correlation values are identified.

56. A method according to any of Clauses 34 to 44 including estimating the cumulative average motion in a sequence of pictures.

57. A method according to any of Clauses 34 to 44 or Ciause 56, further comprising computing a motion-compensated average picture taking into account the average motion in the pictures.

58. A method according to Clause 57, wherein the watermark is cross-correlated with the motion-compensated average picture.

59. A method of detecting a motion-compensated watermark comprising:

estimating the cumulative average motion in a sequence of pictures;
computing an average picture taking into account the average motion in the pictures;
calculating the cross-correlation function of the motion-compensated average picture and the watermark.

60. A watermarked picture, a sequence of pictures, a signal or data storage means containing a picture having a watermark embedded therein by a method according to any of Clauses 1 to 33 or 45 to 51 or 64 to 71 or 80 or 81.

61. Apparatus or a computer program product arranged to perform a method according to any of Clauses 1 to 59 or 62 to 81.

62. A method of decoding data in a picture signal comprising determining local mean values of picture samples corresponding to regions of the picture in which data is carried; comparing said local mean values to estimated or reference local mean values for said regions in the absence of the data, and determining a data value from the result of each comparison, wherein preferably the data value is determined from at least the sign of the difference between the determined local mean value and the estimated or reference local mean value.

63. A method of embedding data comprising a series of data values in a picture comprising a series of picture values comprising defining a plurality of subsets of the picture values, one subset for each data value, and adding an adjustment factor to each picture value in each subset, a first component, preferably the magnitude, of each adjustment factor being a function of an estimate of the visibility of embedded data at the picture value location and being variable between the picture values of each subset, a second component, preferably the sign, of the adjustment factor being determined by the data value and being substantially constant for the picture values of each subset.

64. A method according to any of Clauses 1 to 33 or 45 to 51 including generating the watermark by convolving a key with a repeated data sequence to produce a data-carrying watermark.

65. A method of generating a watermark encoding data to be applied to a picture comprising convolving a key comprising a plurality of bits with a plurality of bits of data.

66. A method according to clause 64 or 65 wherein each data bit is convolved with substantially an entire key segment having a predetermined length.

67. A method according to clause 66, wherein a different key segment is convolved with each data bit.

68. A method according to any of Clauses 66 to 67, wherein each bit of the watermark is applied to a plurality of bits of the picture, preferably a block of at least 4 bits of the picture.

69. A method according to any of Clauses 64 to 68 wherein a registration watermark is applied to the picture in addition to the data carrying watermark, preferably in a method according to any of Clauses 45 to 51, to facilitate decoding of data.

70. A method of embedding a watermark in a moving picture comprising changing the watermark or moving the watermark, preferably substantially randomly, at a shot change, or following detection of an accumulated change in picture content above a predetermined threshold.

71. A method of embedding a data-carrying watermark in a moving picture comprising changing the data carried by the watermark at a shot change, or following detection of an accumulated change in picture content above a predetermined threshold.

72. A method of embedding a data-carrying watermark in a moving picture comprising moving the watermark when the data content of the watermark changes, preferably at a shot change or following detection of an accumulated change in picture content above a predetermined threshold.

73. A method of labelling a frame of a moving picture signal comprising embedding an identifier of at least 64bits into the picture, preferably by a method according to any preceding method clause.

74. A method according to Clause 73, for use in labelling a broadcast signal or signal to be distributed wherein the identifier encodes at least one of:- the originator of the material, an authorised recipient and a material identifier.

75. A method according to Clause 73, for use in labelling a source material in a studio, preferably implemented in a camera or recording device, wherein the identifier includes at least one of:- an identifier of the source of the material, preferably including at least one of an identifier of a camera, recording time, location, conditions, and a user-definable label.

76. A method of decoding a data-carrying watermark embedded in a picture, by a method according to any of Clauses 64 to 69 comprising:

setting a positional reference, preferably based on the position of a registration watermark embedded in accordance with Clause 69;
estimating watermark values at a plurality of picture locations, preferably by determining local average values;
based on the estimated watermark values at locations corresponding to each data bit and a key value corresponding to the location, determining a value for each data bit.

77. A method according to Clause 76, wherein watermark values are determined for a plurality of locations for each data bit and wherein the value for each data bit is determined by averaging the product of an estimated watermark value and a key value for each of said plurality of locations.

78. A method of detecting a watermark in a sequence of moving pictures comprising determining an expected position of the watermark and thereafter detecting the watermark based on the expected position, wherein the expected position is re-determined following a shot change or a change in picture content above a threshold.

79. A method substantially as any one herein described, with reference to the accompanying drawings.

80. A method of embedding data in a picture comprising:

generating a data-carrying watermark having a plurality of watermark values by convolving a set of data comprising a plurality of bits of data with a key comprising a plurality of bits;
applying the watermark to the picture by combining each watermark value with a plurality of picture values based on a local estimate of the visibility of the watermark

81. A method according to Clause 80 for embedding a data stream in a sequence of pictures wherein sets of data are generated at intervals from the data stream and each set is embedded in a plurality of pictures.

**Claims**

1. A method of testing for the presence of a watermark embedded in a picture signal, comprising:

receiving the picture signal;
enhancing the watermark content of the received picture signal using local mean picture values;
correlating the picture signal or a processed signal derived therefrom with a watermark signal;
outputting an estimate of the presence of the watermark, based on the results of said correlation.

2. A method according to Claim 1 wherein said local mean picture values are based on received reference picture information.

3. A method according to Claim 2 wherein the received reference picture information is indicative of local mean values of subsets of picture samples in the picture prior to watermarking, or compressed information from which said reference local mean values can be derived.

4. A method according to Claim 1 wherein said local mean picture values are estimated values indicative of local mean values of subsets of picture samples in the picture prior to watermarking.

5. A method according to any preceding claim, wherein enhancing includes subtracting the reference or estimated local mean values from local mean values determined for the received picture signal to give a difference signal.

6. A method according to any preceding claim, wherein a grid is defined dividing the received signal into regions corresponding to allocation of watermark values, wherein local mean values are determined for each of said regions.

7. A method according to any preceding claim, further comprising deriving a series of data values from the received picture signal.

8. A method according to Claim 7, wherein the data sample values are determined based on the sign of the difference signal in regions corresponding to allocation of data values.

9. A method according to any preceding claim, wherein said correlating is performed for a plurality of offsets and the offset giving the maximum correlation is determined to give a measure of the position of the watermark within the picture.

10. A method according to any preceding claim, wherein correlating is performed taking into account possible effects of picture processing operations, for example rotation, scaling, shifting, cropping or re-sampling operations.

11. A method according to any preceding claim, including estimating the cumulative average motion in a sequence of pictures.

12. A method according to any preceding claim, further comprising computing a motion-compensated average picture taking into account the average motion in the pictures.

13. A method according to Claim 12, wherein the watermark is cross-correlated with the motion-compensated average picture.

14. A method according to any preceding claim, for detecting a watermark derived from a combination of substantially independent watermarks, wherein an estimate of the presence of each of said number of substantially independent watermarks is produced.

15. A method according to Claim 14, wherein said number of substantially independent watermarks comprises a subset selected from a defined set of substantially independent watermarks, and wherein the picture is cross correlated with a composite watermark derived from a sum of each of the watermarks of said defined set.

16. A method according to Claim 15 wherein, at least in the event of cross correlation with said composite watermark yielding a positive result, the picture is cross correlated with each of the watermarks of said defined set.

17. A method of testing for the presence of a watermark embedded in a picture signal, comprising:

    receiving the picture signal;
    estimating, from said picture signal, local mean picture values of subsets of picture samples in the picture prior to watermarking;
    using said estimated values in a watermark correlation; and
    outputting an estimate of the presence of the watermark, based on the results of said correlation.

18. A method according to Claim 17, wherein said estimated local mean values are calculated from local mean values of subsets of the received picture signal

19. A method according to Claim 18, wherein said estimated local mean values are calculated from the average of local mean values of neighbouring subsets of the received picture signal.

20. Apparatus for testing for the presence of a watermark embedded in a picture signal, comprising:

    means for receiving the picture signal;
    means for estimating, from said picture signal, local mean picture values of subsets of picture samples in the picture prior to watermarking;
    means for performing a watermark correlation using said estimated values; and
    means for outputting an estimate of the presence of the watermark, based on the results of said correlation.

21. A computer program or computer program product comprising instructions for performing a method according to any one of Claims 1 to 19.

Fig. 1

Fig. 2

Fig. 3

= cell for 1 watermark sample    = cell for 1 data bit

Fig. 4

W1

W3

W2

subset of 4 watermarks

set of 16 watermarks

Fig. 5

Fig. 6

Fig. 7

Fig. 8